# EUROPÄISCHE PATENTSCHRIFT

(11) **EP 2 462 641 B1**
(45) Veröffentlichungstag und Bekanntmachung des Hinweises auf die Patenterteilung: **08.04.2015**
(21) Anmeldenummer: 10737588.3
(22) Anmeldetag: 03.08.2010
(51) Int. Cl.: H01M 2/10

(54) **VORRICHTUNG ZUR VERSPANNUNG EINES ENERGIESPEICHERS**
DEVICE FOR RESTRAINING AN ENERGY STORE
DISPOSITIF DE SERRAGE D'UN ACCUMULATEUR D'ÉNERGIE

(30) Priorität: 05.08.2009 DE 102009036141; 15.09.2009 DE 102009041348
(43) Veröffentlichungstag der Anmeldung: 13.06.2012
(73) Patentinhaber: MAHLE Behr GmbH & Co. KG, 70469 Stuttgart (DE)
(72) Erfinder: HIRSCH, Stefan, 70180 Stuttgart (DE); ISERMEYER, Tobias, 74245 Löwenstein (DE); KOHLBERGER, Markus, 70174 Stuttgart (DE); MOLDOVAN, Florian, 70569 Stuttgart (DE); MOSER, Michael, 73492 Rainau (DE); NEFF, Heiko, 70435 Stuttgart (DE); SCHIEHLEN, Thomas, 89174 Altheim (DE); SCHMID, Caroline, 70186 Stuttgart (DE); WIEBELT, Achim, 71711 Steinheim (DE)
(74) Vertreter: Grauel, Andreas
(86) Internationale Anmeldenummer: PCT/EP2010/061288
(87) Internationale Veröffentlichungsnummer: WO 2011/015580

(56) Entgegenhaltungen:
- GB-A- 417 060
- US-A- 1 392 757
- US-A- 1 542 821
- US-A- 2 621 222
- US-B1- 6 224 998

## Beschreibung

Die vorliegende Erfindung bezieht sich auf eine Vorrichtung zur Verspannung eines Energiespeichers und einen Energiespeicher, die beispielsweise in Fahrzeugen eingesetzt werden können.

In modernen Hybrid-Elektrofahrzeugen oder Elektrofahrzeugen (HEV/EV Fahrzeugen) werden leistungsfähige Energiespeicher, wie zum Beispiel Li-Ionen oder NiMH-Akkumulatoren oder Super-Caps eingesetzt. Bei diesen kommt es beim schnellen Laden und Entladen aufgrund von Widerständen in und außerhalb der Zellen zur Erwärmung. Temperaturen über 50°C schädigen die Energiespeicher dauerhaft. Um die Funktion der Energiespeichers zu gewährleisten müssen diese aktiv gekühlt werden. Dazu werden die Energiespeicher mit einer mit Kältemittel durchströmten Platte in thermischen Kontakt gebracht und somit gekühlt.

Bei der Kühlung der Zellen ist es wichtig, dass alle Zellen gleichmäßig gekühlt werden. Bei ungleichmäßiger Kühlung der Zellen altern die Zellen unterschiedlich schnell, was die Funktion und Leistung der Energiespeicher negativ beeinflusst. Des Weiteren sind die beschriebenen Energiespeicher mechanisch mit dem Fahrzeug zu verbinden um eine sichere Befestigung zu gewährleisten und eine Beschädigung der Energiespeicher zu vermeiden. Hierbei müssen sowohl die aufzubringenden als auch auftretenden Kräfte und Beschleunigungen aufgenommen werden sowie entsprechende geometrische Toleranzen der Energiespeicher überbrückt werden.

Moderne Energiespeicher besitzen meist einfache Gehäuse, die keine Vorrichtung zur Befestigung in Fahrzeugen vorsehen. Daher werden diese meist mit separaten Gehäusen oder Vorrichtungen versehen, die die Anforderungen des Toleranzausgleichs bei gleichzeitiger Verwendung mehrerer Energiespeicher nicht erfüllen oder dies nur mit vergleichsweise großem Bauraum und/oder aufwändiger Montage bewerkstelligen können.

Die DE 27 01 780 B1 beschreibt eine Batteriehalterung für eine mit einem Deckel abgedeckte Batterie eines Kraftfahrzeuges mit einer Tragvorrichtung zur Aufnahme der Batterie und einer U-förmig ausgebildeten, die Batterie überspannenden Halterung, die aus einem horizontal verlaufenden, auf der oberen Seite der Batterie zumindest teilweise aufliegenden Bügel mit vertikal verlaufenden Spannteilen gebildet ist, die an der Tragvorrichtung lösbar angeschlossen sind.

Die üblicherweise verwendeten Spann- und Befestigungssysteme sind meist sehr bauraum- und/oder montageintensiv. Zudem ist der Ausgleich von auftretenden geometrischen Toleranzen bedingt durch die Herstellung, Montage, den Betrieb etc. der Energiespeicher bei diesen Systemen nicht oder nur bedingt gegeben.

Es ist die Aufgabe der vorliegenden Erfindung eine verbesserte Vorrichtung zur Verspannung eines Energiespeichers und einen verbesserten Energiespeicher zu schaffen.

Diese Aufgabe wird durch eine Vorrichtung zur Verspannung gemäß Anspruch 1 sowie einen Energiespeicher gemäß Anspruch 11 gelöst.

Kern der Erfindung sind Spann- und Befestigungskonzepte für elektrische Energiespeicher und insbesondere das Design und die Auslegung diverser Spann- und Befestigungskonzepte für elektrische Energiespeicher mit eigenstabilen Gehäusen auf einem Kühlelement oder in einem Gehäuse.

Die erfindungsgemäßen Konzepte begegnen den Nachteilen der aktuellen Befestigungskonzepte durch eine Integration von Feder- und Ausgleichselementen über die sowohl die erforderlichen Kräfte als auch der notwendige Toleranzausgleich gewährleistet wird.

Es werden erfindungsgemäß Lösungen vorgeschlagen die Spannkräfte und Toleranzausgleich bieten, entweder für jede einzelne Zelle oder für eine definierte Gruppe von Zellen, die zu einem "Zellpack" vorgefügt sind. Die erfindungsgemäßen Spannsysteme können sich dabei auf Energiespeicher mit eigenstabilen Gehäuse, so genannte Hardcase-Zellen, beziehen.

Vorteilhafterweise können die erfindungsgemäßen Spannsysteme einen geringen Bauraum und ein geringes Gewicht gewährleisten. Zudem kann eine Krafteinleitung und Übertragung, sowie ein Toleranzausgleich in einem Konzept vereinigt werden. Es lassen sich also sowohl die aufzubringenden als auch die auftretenden Kräfte und Beschleunigungen aufnehmen sowie die entsprechenden geometrischen Toleranten der Energiespeicher überbrücken,

Ferner kann der erfindungsgemäße Ansatz ohne den Einsatz von Schraubverbindungen auskommen. Erforderliche Befestigungen können durch einhaken, einrasten und verspannen bereitgestellt werden.

Die vorliegende Erfindung schafft eine Vorrichtung zur Verspannung eines Energiespeichers, wie diese in Anspruch 1 definiert ist.

Der Energiespeicher kann auf Li-Ionen- oder NiMH-Akkumulatoren oder Super-Caps basieren und zum Einsatz in Hybrid-Elektrofahrzeugen oder Elektrofahrzeugen geeignet sein. Demnach kann es sich bei den Zellen beispielsweise um galvanische Zellen handeln. Die erfindungsgemäße Vorrichtung kann ein Verbindungselement zwischen dem Energiespeicher und einem Fahrzeugteil darstellen, an dem der Energiespeicher zu befestigen ist. Der Energiespeicher kann quaderförmig sein. Die erste Seite kann eine Oberseite und die zweite Seite kann eine Unterseite des Energiespeichers darstellen. Vertikal kann sich auf eine vorzugsweise zu wählende Ausrichtung des Energiespeichers im Betrieb handeln. Die erste und die zweite Spannkraft können den gleichen Betrag aufweisen, jedoch in entgegengesetzte Richtungen, jeweils zu dem Energiespeicher hin, wirken. Die Spannkräfte können eine sichere Verbindung zwischen Halteeinrichtungen und Energiespeicher ermöglichen. Insbesondere kann ein Verrutschen des Energiespeichers in Bezug auf die Halteeinrichtungen verhindert werden und auftretende Kräfte und Beschleunigungen können durch die Halteeinrichtungen sowohl von dem Energiespeicher aufgenommen als auch auf diesen übertragen werden. Der toleranzbehaftete Abstand kann durch herstellungsbedingte Abweichungen in der Größe des Energiespeichers oder der einzelnen Zellen hervorgerufen sein. Die dehnbare Spanneinrichtung kann aufgrund ihrer Form oder ihres Materials elastisch in ihrer Länge dehnbar sein. Beispielsweise kann die Spanneinrichtung mäanderformig oder als ein gebogener Spanndraht ausgeführt sein. Durch die Dehnung kann die Spanneinrichtung zum einen Toleranzausgleich gewährleisten und zum anderen, durch ein der Dehnung entgegenwirkendes Zusammenziehen eine Rückstellkraft oder eine Federkraft bereitstellen, die die Spannkräfte erzeugen. Somit können die Spannkräfte dadurch erzeugt werden, dass die dehnbare Spanneinrichtung bei der Montage auf den Energiespeicher zunächst auf ein größer als später erforderliches Maß auseinander gezogen wird und sich anschließend zu einer Endstellung auf ein geringeres, aber immer noch gespanntes, Maß zusammenzieht. Durch das Auseinanderzeihen und Zusammenziehen ändert sich die vertikale Länge der dehnbaren Spanneinrichtung. Insbesondere handelt es sich bei der dehnbaren Spanneinrichtung nicht um eine Schraube und die Spannkraft wird nicht über eine Schraubverbindung bereitgestellt. Je nach Ausführungsform können die ersten und zweiten Halteelemente über die dehnbare Spanneinrichtung oder durch eine weitere Verbindungseinrichtung miteinander verbunden sein. Die dehnbare Spanneinrichtung und die Halteeinrichtungen können unlösbar miteinander verbunden sein, und beispielsweise aus einem Stück gefertigt sein oder aus einem Stück bestehen. Alternativ kann die dehnbare Spanneinrichtung in die Halteeinrichtungen eingehakt werden.

Zumindest eine der Halteeinrichtungen kann als ein Haken ausgebildet sein, der zum Übertragen der Spannkraft mit der entsprechenden Seite verhakt werden kann. Ein unbeabsichtigtes Lösen des Hakens kann durch die Spannkraft verhindert werden.

Ferner kann zumindest eine der Halteeinrichtungen als eine Halteplatte ausgebildet ist, die zum Übertragen der Spannkraft auf der entsprechenden Seite aufliegen kann. Eine solche Halteplatte ermöglicht eine gleichmäßige Verteilung des Krafteintrags über die Oberfläche des Energiespeichers.

Gemäß einer Ausführungsform kann die dehnbare Spanneinrichtung zwischen der ersten und der zweiten Halteeinrichtung angeordnet sein und sowohl mit der ersten Halteeinrichtung als auch mit der zweiten Halteeinrichtung verbunden sein. Durch ein dehnen der dehnbaren Spanneinrichtung kann der Abstand zwischen der ersten und zweiten Halteeinrichtung vergrößert werden, und somit an unterschiedliche Abmessungen und insbesondere unterschiedliche Höhen unterschiedlicher Energiespeicher angepasst werden. Durch ein Spannen der dehnbaren Spanneinrichtung können die Spannkräfte bereitgestellt werden.

Auch kann zumindest eine der Halteeinrichtungen als eine Rundfeder ausgebildet sein, die zum Übertragen der Spannkraft mit der entsprechenden Seite verhakt werden kann. Dabei kann die Rundfeder sowohl die Spannkraft bereitstellen als auch einen Toleranzausgleich ermöglichten. Somit kann die Rundfeder zumindest eine, der mindestens einen dehnbaren Spanneinrichtung umfassen. Je nach Ausführungsform können zusätzliche Verbindungselemente oder zusätzliche dehnbaren Spanneinrichtungen zwischen den ersten und den zweiten Halteelementen vorgesehen sein.

Die dritte, vierte und fünfte Seite können zwischen der ersten und der zweiten Seite angeordnet sein, wobei die dritte Seite zwischen der vierten und der fünften Seite angeordnet sein kann. Die erfindungsgemäße Vorrichtung kann die dritte Seite vollstandig überspannen. Der Verbindungssteg kann in einem oberen Bereich oder in einem unteren Bereich der dritten Seite angeordnet sein. Auch können mehrere Verbindungsstege, beispielsweise einer in einem oberen Bereich und einer in einem unteren Bereich der dritten Seite angeordnet sein. Der Verbindungssteg ermöglicht eine seitliche Befestigung der erfindungsgemäßen Vorrichtung an dem Energiespeicher.

Gemäß einer Ausführungsform kann der Verbindungssteg zwischen den zwei dehnbaren Spanneinrichtung und der Mehrzahl erster Halteeinrichtungen oder der Mehrzahl zweiter Halteeinrichtungen angeordnet sein. Der Verbindungssteg kann somit eine Verbindung zwischen benachbarten Halteeinrichtungen und benachbarten dehnbaren Spanneinrichtungen bereitstellen und somit stabilisierend wirken.

Auch können die mindestens zwei dehnbaren Spanneinrichtungen parallel zueinander angeordnet sein und zwischen zwei benachbarten dehnbaren Spanneinrichtungen kann jeweils ein vertikaler Steg angeordnet sein, der mit dem Verbindungssteg verbunden ist.

Dabei kann der vertikale Steg an einem, dem Verbindungssteg zugewandten Ende eine Biegung aufweisen, so dass ein weiterer Bereich des vertikalen Stegs und die mindestens zwei dehnbaren Spanneinrichtungen zwischen der dritten Seite und dem Verbindungssteg angeordnet sind. Bei der Biegung kann es sich um eine 180 Grad Biegung oder Faltung handeln. In dem der Verbindungssteg, die in vertikaler Richtung verlaufenden dehnbaren Spanneinrichtungen überspannt, ermöglicht der Verbindungssteg eine weitere Stabilisierung der erfindungsgemäßen Anordnung.

Auch kann die erfindungsgemäße Vorrichtung eine Befestigungseinrichtung aufweisen, die ausgebildet ist, um eine Befestigung des Energiespeichers an einem Fahrzeugteil oder an einer zur Kühlung oder Heizung des Energiespeichers vorgesehenen Kühlplatte zu ermöglichen. Somit kann der Energiespeicher über die erfindungsgemäße Vorrichtung in ein Fahrzeug montiert werden.

Die vorliegende Erfindung schafft ferner einen Energiespeicher, der eine oder eine Mehrzahl von Zellen und eine erfindungsgemäße Vorrichtung zur Verspannung aufweist.

Vorteilhafte Ausführungsbeispiele der vorliegenden Erfindung werden nachfolgend Bezug nehmend auf die belliegenden Zeichnungen näher erläutert. Es zeigen:
- Fig. 1: eine horizontale Verspannung eines Zellmoduls;
- Fig. 2: ein Spannkonzept, gemäß einem Ausführungsbeispiel der vorliegenden Erfindung;
- Fig. 3: eine Detailansicht eines erfindungsgemäßen Spannkonzepts;
- Fig. 4: eine Detailansicht eines erfindungsgemäßen Spannkonzepts;
- Fig. 5: eine Darstellung eines Spannhaken mit einem Dehnelement, gemäß einem Ausführungsbeispiel der vorliegenden Erfindung;
- Fig. 6: ein Zellmodul mit seitlichen Spannelementen, gemäß einem Ausführungsbeispiel der vorliegenden Erfindung;
- Fig. 7: eine Detailansicht eines erfindungsgemäßen Spannkonzepts;
- Fig. 8: eine Detailansicht eines erfindungsgemäßen Spannkonzepts;
- Fig. 9: ein Zellmodul mit seitlichen Spannelemente, gemäß einem weiteren Ausführungsbeispiel der vorliegenden Erfindung;
- Fig. 10: eine Detailansicht eines erfindungsgemäßen Spannkonzepts;
- Fig. 11: eine Detailansicht eines erfindungsgemäßen Spannkonzepts;
- Fig. 12: ein Spannkonzept mit obenliegender Halteplatte, gemäß einem weiteren Ausführungsbeispiel der vorliegenden Erfindung; und
- Fig. 13: ein Spannkonzept mit obenliegender Halteplatte, gemäß einem weiteren Ausführungsbeispiel der vorliegenden Erfindung.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

Die in dieser Erfindungsmeldung beschriebenen Konzepte und Ansätze stellen gemäß den technischen Möglichkeiten sinnvolle Ausführungen dar. Es sind jedoch auch entsprechende Variationen bedingt durch die geometrische Gestaltung der Energiespeichergehäuse oder der Kühlungskomponenten denkbar. Im Zweifelsfalle ist eine applikationsspezifische Gestaltung der hier vorgestellten Konzepte notwendig,

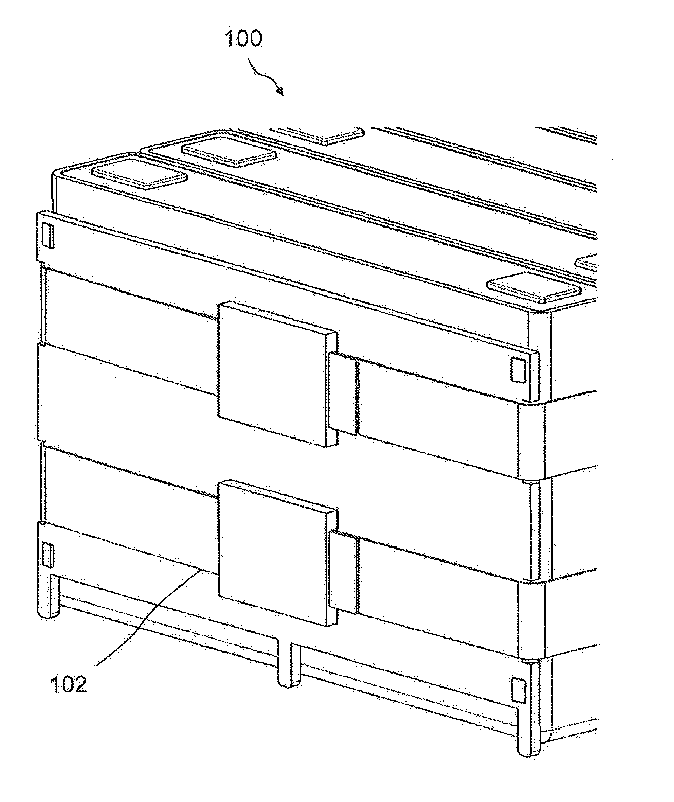

Fig. 1 zeigt einen Energiespeicher 100 in Form eines Zellmoduls und eine horizontale Verspannung 102 des Zellmoduls zur Stabilisierung und Steigerung der Zell-Lebensdauer.

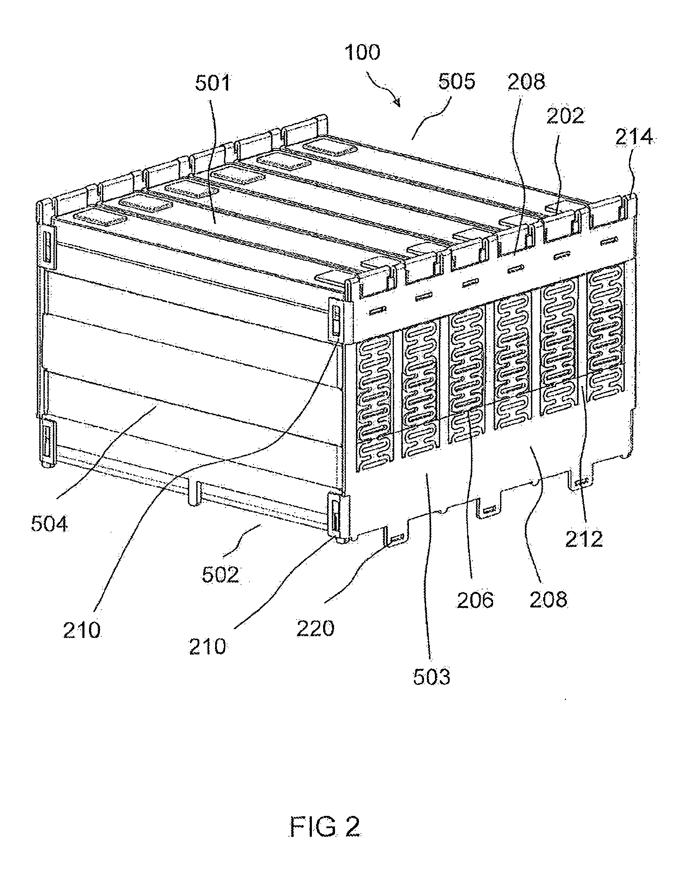

Fig. 2 zeigt einen Energiespeicher 100 mit einer Vorrichtung zur Verspannung, gemäß einem Ausführungsbeispiel der vorliegenden Erfindung. Der Energiespeicher 100 weist eine Oberseite und eine Unterseite auf. Die Vorrichtung zur Verspannung ist auf einer zwischen der Oberseite und der Unterseite angeordneten Stirnseite angeordnet.

Die Vorrichtung zur Verspannung weist eine Mehrzahl erster Halteeinrichtungen 202 , eine Mehrzahl von dehnbaren Spanneinrichtungen 206, einen ersten und einen zweiten horizontal angeordneten Verbindungssteg 208, seitliche Befestigungseinrichtungen 210, vertikale Stege 212 mit Biegungen 214 sowie Befestigungseinrichtungen 220 auf. Die dehnbaren Spanneinrichtungen 206, die horizontal angeordneten Verbindungssteg 208 und die vertikalen Stege 212 können parallel zu der Stirnseite des Energiespeichers angeordnet sein.

Die ersten Halteeinrichtungen 202 sind entlang eines Randbereichs der Oberseite angeordnet. Die ersten Halteeinrichtungen 202 können als Haken ausgebildet sein, mit denen die Vorrichtung zum Verspannung an der Oberseite befestigt werden kann. Entsprechend den ersten Halteeinrichtungen 202 können entlang der Unterseite zweite Halteeinrichtungen angeordnet sein.

Die Spanneinrichtungen 206 können parallel zueinander angeordnet sein und eine Verbindung zwischen den ersten Halteeinrichtungen 202 und den zweiten Halteeinrichtungen darstellen. Die Spanneinrichtungen 206 können als elastische Dehnstreifen, Dehnelemente oder Federelemente ausgebildet sein.

Gemäß diesem Ausführungsbeispiel ist zwischen den Spanneinrichtungen 206 und den zweiten Halteeinrichtungen ein unterer horizontaler Verbindungssteg 208 angeordnet. Eine an dem unteren horizontalen Verbindungssteg 208 angeordnete seitliche Befestigungseinrichtung 210 kann einen abgewickelten Fortsatz des Verbindungsstegs 208 darstellen, der an einer benachbarten Seite Stirnseite des Energiespeichers 100 anlegt. Die seitliche Befestigungseinrichtung 210 kann eine Durchgangsöffnung aufweisen, in die ein von der benachbarten Stirnseite hervorstehender Fortsatz eingreifen kann.

Die Biegungen 214 der vertikalen Stege 212 sind mit einem oberen horizontalen Verbindungssteg 208 verbunden. Eine an dem oberen horizontalen Verbindungssteg 208 angeordnete seitliche Befestigungseinrichtung 210 kann entsprechend der unteren angeordneten seitlichen Befestigung Einrichtung 210 ausgebildet sein. Der obere horizontalen Verbindungssteg 208 kann die Spanneinrichtungen 206 überspannen. Die Befestigungseinrichtungen 220 können durch Fortsätze des unteren horizontalen Verbindungsstegs 208 ausgeformt werden, die über die Unterseite des Energiespeichers 100 hinausragen.

Die ersten und die zweiten Halteeinrichtungen 202 ermöglichen eine vertikale Befestigung und die seitliche Befestigungseinrichtungen 210 ermöglichen eine horizontale Befestigung der Vorrichtung zur Verspannung. Durch eine Rückstellkraft der gedehnten Spanneinrichtungen 206 werden die ersten und die zweiten Halteeinrichtungen 202 gegen die Oberseite beziehungsweise die Unterseite der Energiespeichers 100 gezogen. Somit können die gedehnten Spanneinrichtungen 206 eine entsprechende Spannkraft bereitstellen. Ferner ermöglicht die Dehnung der Spanneinrichtungen 206 eine variable vertikale Länge der Vorrichtung zur Verspannung. Auf diese Weise kann ein Abstand zwischen den ersten und den zweiten Halteeinrichtungen an eine jeweilige Höhe des Energiespeichers 100 angepasst werden.

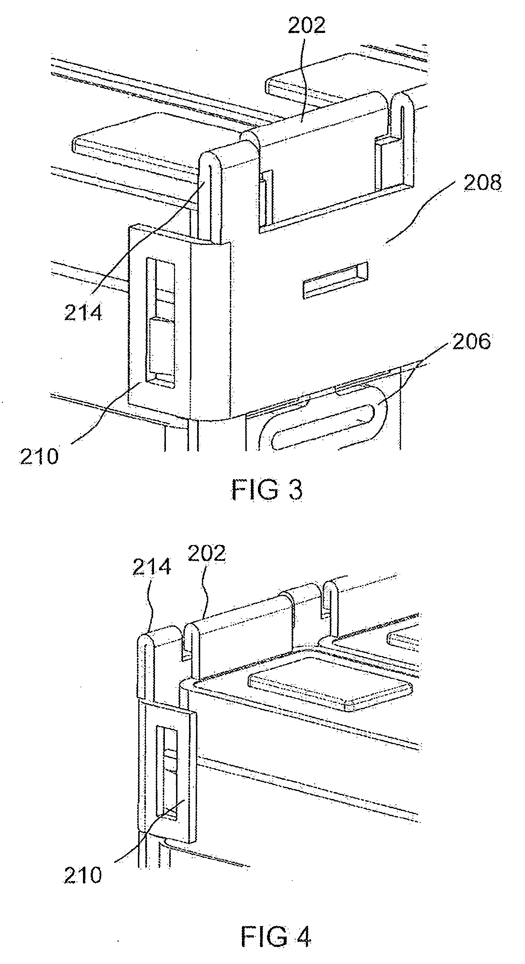

Die Figuren 3 und 4 zeigen jeweils eine Detailansicht des in Fig. 2 gezeigten Spannkonzepts mit Darstellung des Spanngehäuses, des Spannelementes sowie einer möglichen Montageeinrichtung in Form einer Verrastung.

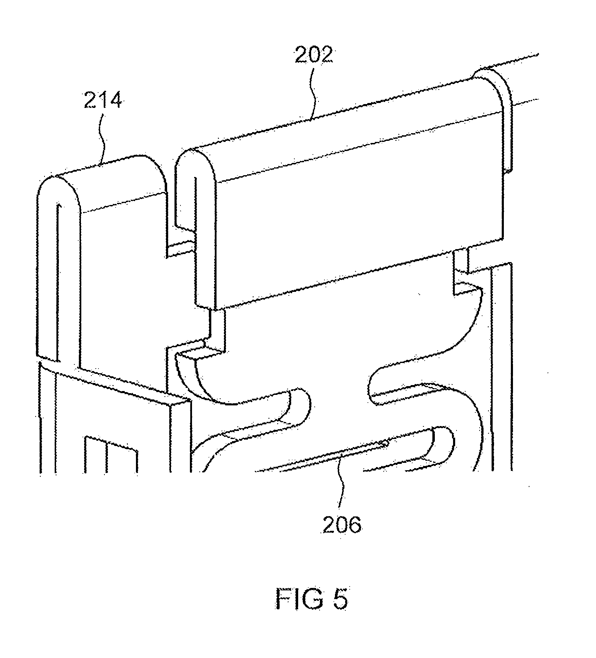

Fig. 5 zeigt eine Detailansicht des in Fig. 2 gezeigten Spannkonzepts mit einem Spannhaken 202 und einem Dehnelement 206 zur Kraftübertragung und integriertem Anschlag. Der Spannhaken 202 kann in entsprechende Gegenstücke an der Oberfläche oder der Stirnseite des Energiespeichers eingreifen.

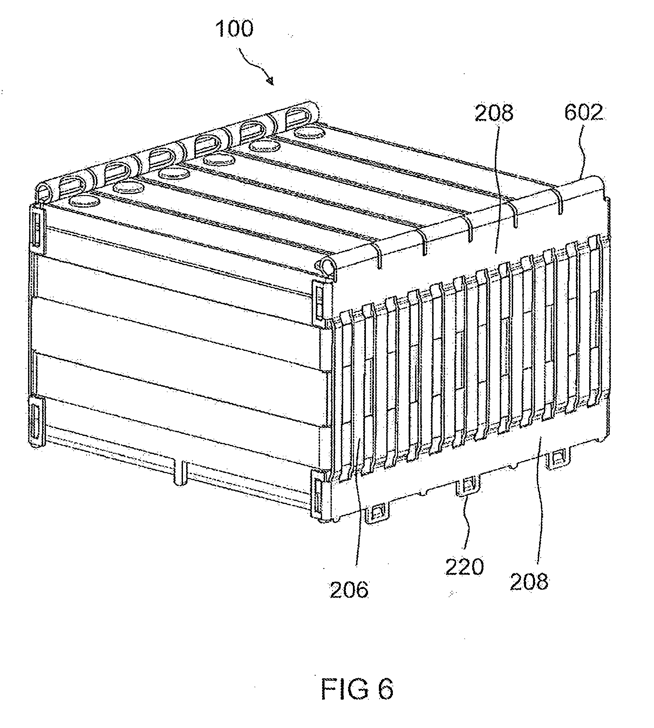

Fig. 6 zeigt einen Energiespeicher 100 mit einer Vorrichtung zur Verspannung, gemäß einem weiteren Ausführungsbeispiel der vorliegenden Erfindung. Gezeigt ist ein komplettes Zellmodul 100 mit seitlichen Spannelementen 206, wobei eine Spannung über "Rundfedern" 602 erfolgen kann.

Gemäß diesem Ausführungsbeispiel sind die ersten Halteeinrichtungen 602 als Rundfedern ausgebildet, die auf einem Randbereich der Oberseite des Energiespeichers 100 aufliegen. Durch die Rundfedern 206 kann sowohl eine Spannkraft auf die Oberseite des Energiespeichers 100 ausgeübt werden als auch eine Anpassung der vertikalen Länge der Vorrichtung zur Verspannung durchgeführt werden.

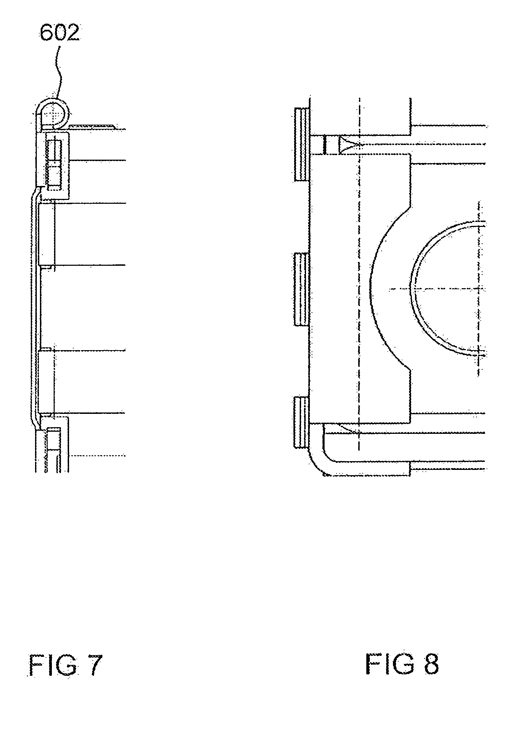

Die Figuren 7 und 8 zeigen jeweils eine Detailansicht des in Fig. 6 gezeigten Spannkonzepts.

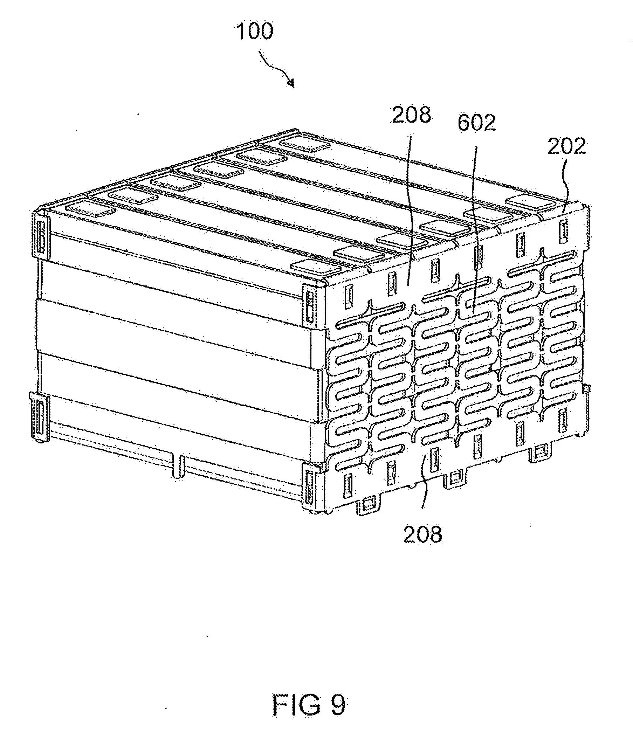

Fig. 9 zeigt einen Energiespeicher 100 mit einer Vorrichtung zur Verspannung, gemäß einem weiteren Ausführungsbeispiel der vorliegenden Erfindung. Alternative zu den in Fig. 6 gezeigten Rundfedern werden mäanderförmige Spannelemente 206 eingesetzt. Die ersten Halteeinrichtungen 202 können als Haken ausgebildet sein, die an der Oberseite einrasten können.

Die Spannelemente 206 können zwischen einem oberen und einem unteren horizontalen Verbindungssteg 208 angeordnet sein. Der obere horizontale Verbindungssteg 208 kann mit den ersten Halteeinrichtungen 202 und der untere horizontale Verbindungssteg 208 kann mit den zweiten Halteeinrichtungen an der Unterseite des Energiespeichers 100 unlösbar verbunden sein. Beispielesweise können die Halteeinrichtungen 202 gebogene Fortsätze der Verbindungsstege 208 darstellen. Ebenso können die Spannelemente 206 Fortsätze der Verbindungsstege 208 darstellen. Somit können die Halteeinrichtungen 202, die Verbindungsstege 208 und die Spannelemente 206 aus einem Teil, beispielsweise einem Blech gefertigt sein.

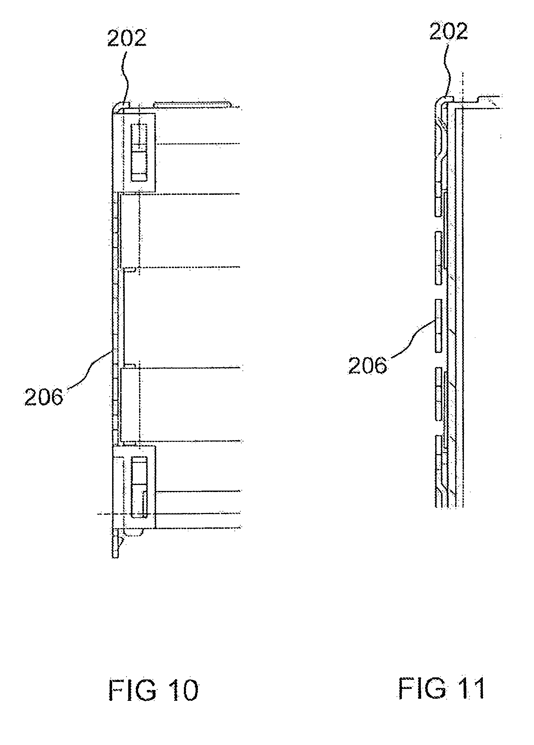

Die Figuren 10 und 11 zeigen jeweils eine Detailansicht des in Fig. 6 gezeigten Spannkonzepts.

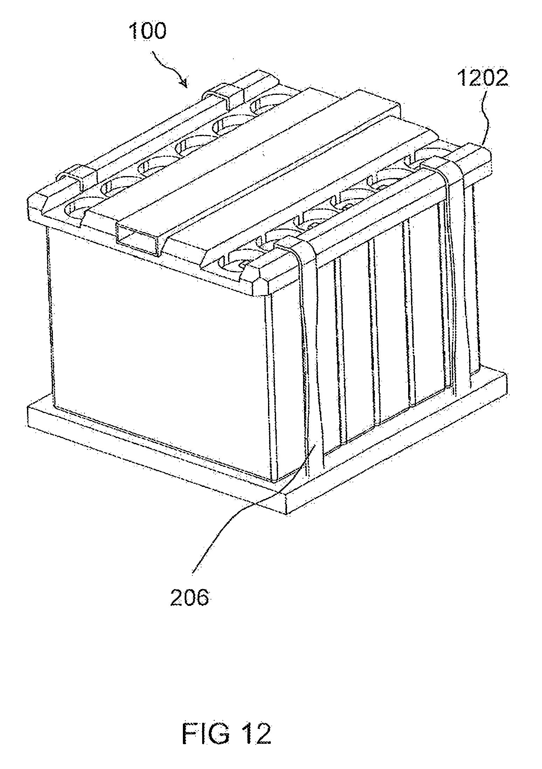

Fig. 12 zeigt einen Energiespeicher 100 mit einer Vorrichtung zur Verspannung, gemäß einem weiteren Ausführungsbeispiel der vorliegenden Erfindung. Gezeigt ist ein alternatives Spannkonzept mit obenliegende Halteplatte 1202 zur Egalisierung des Anpressdrucks und seitlichen Spann-/Dehnelementen 206. Die Halteplatte 1202 kann die Oberseite des Energiespeichers 100 überspannen. Die Spanneinrichtungen 206 können durch Öffnungen der Halteplatte 1202 gerührt und in diese eingehakt sein. Auf der Unterseite können die Spanneinrichtungen 206 mit einer unteren Halteplatte fest verbunden sein.

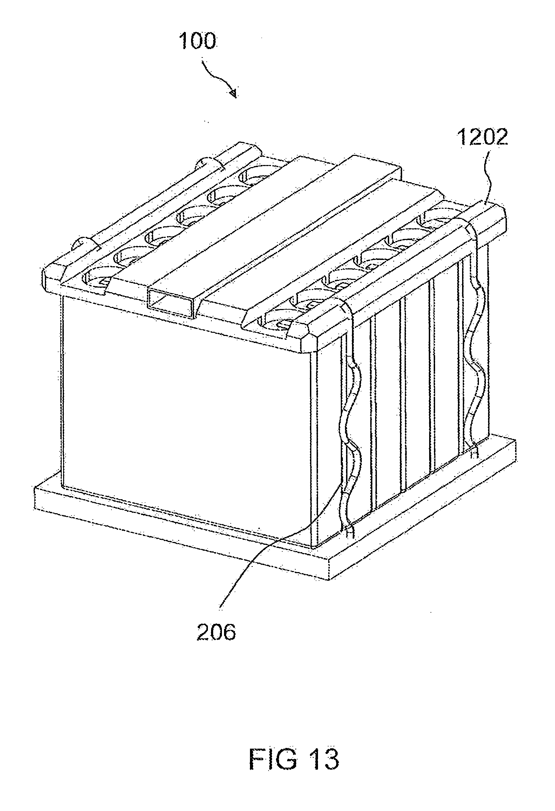

Fig. 13 zeigt einen Energiespeicher 100 mit einer Vorrichtung zur Verspannung, gemäß einem weiteren Ausführungsbeispiel der vorliegenden Erfindung. Im Unterschied zu dem in Fig. 12 gezeigten Ausführungsbeispiel sind die Spanneinrichtungen 206 als gebogene Spanndrähte ausgeführt.

Die beschriebenen Ausführungsbeispiele sind nur beispielhaft gewählt und können miteinander kombiniert werden.

## Patentansprüche

1. Vorrichtung zur Verspannung eines Energiespeichers (100), der eine oder eine Mehrzahl von Zellen aufweist, die zwischen einer ersten Seite (501) des Energiespeichers und einer, der ersten Seite vertikal gegenüberliegenden zweiten Seite (502) des Energiespeichers angeordnet ist, mit folgenden Merkmalen:
mindestens einer ersten Halteeinrichtung (202), die ausgebildet ist, um eine in Richtung der zweiten Seite wirkende erste Spannkraft auf die erste Seite des Energiespeichers zu übertragen;
mindestens einer zweiten Halteeinrichtung, die ausgebildet ist, um eine in Richtung der ersten Seite wirkende zweite Spannkraft auf die zweite Seite des Energiespeichers zu übertragen; und
mindestens einer dehnbaren Spanneinrichtung (206), die ausgebildet ist, um die erste und die zweite Spannkraft bereitzustellen und ferner ausgebildet ist, um einen Abstand zwischen der mindestens einen ersten Halteeinrichtung und der mindestens einen zweiten Halteeinrichtung an einen toleranzbehafteten Abstand zwischen der ersten und der zweiten Seite anzupassen, mit einer Mehrzahl erster Halteeinrichtungen (202), einer Mehrzahl zweiter Halteeinrichtungen, mindestens zwei dehnbaren Spanneinrichtungen (206) und einem horizontal angeordneten Verbindungssteg (208), der mit der Mehrzahl erster Halteeinrichtungen oder der Mehrzahl zweiter Halteeinrichtungen verbunden ist, und wobei der Verbindungssteg horizontal über eine, zwischen einer vierten (504) und einer fünften Seite (505) angeordneten dritten Seite (503) des Energiespeichers verläuft und eine erste Befestigungseinrichtung (210) zur Befestigung des Verbindungsstegs an der vierten Seite und eine zweite Befestigungseinrichtung zur Befestigung des Verbindungsstegs an der fünften Seite aufweist.

2. Vorrichtung gemäß Anspruch 1, bei der zumindest eine der Halteeinrichtungen (202) als ein Haken ausgebildet ist, der zum Übertragen der Spannkraft mit der entsprechenden Seite verhakt werden kann.

3. Vorrichtung gemäß einem der vorangegangenen Ansprüche, bei der zumindest eine der Halteeinrichtungen als eine Halteplatte (1202) ausgebildet ist, die zum Übertragen der Spannkraft auf der entsprechenden Seite aufliegen kann.

4. Vorrichtung gemäß einem der vorangegangenen Ansprüche, bei der die dehnbare Spanneinrichtung (206) zwischen der ersten und der zweiten Halteeinrichtung (202) angeordnet ist und sowohl mit der ersten Halteeinrichtung als auch mit der zweiten Halteeinrichtung verbunden ist.

5. Vorrichtung gemäß einem der vorangegangenen Ansprüche, bei der zumindest eine der Halteeinrichtungen als eine Rundfeder (602) ausgebildet ist, die zum Übertragen der Spannkraft mit der entsprechenden Seite verhakt werden kann.

6. Vorrichtung gemäß Anspruch 5, bei der die Rundfeder (602) zumindest eine, der mindestens einen dehnbaren Spanneinrichtung umfasst.

7. Vorrichtung gemäß Anspruch 6, wobei der Verbindungssteg (208) zwischen den zwei dehnbaren Spanneinrichtungen (206) und der Mehrzahl erster Halteeinrichtungen (202) oder der Mehrzahl zweiter Halteeinrichtungen angeordnet ist.

8. Vorrichtung gemäß einem der vorangegangenen Ansprüche, bei der die mindestens zwei dehnbaren Spanneinrichtungen (206) parallel zueinander angeordnet sind und zwischen zwei benachbarten dehnbaren Spanneinrichtungen jeweils ein vertikaler Steg (212) angeordnet ist, der mit dem Verbindungssteg (208) verbunden ist.

9. Vorrichtung gemäß Anspruch 8, bei der der vertikale Steg (212) an einem, dem Verbindungssteg zugewandten Ende eine Biegung (214) aufweist, so dass ein weiterer Bereich des vertikalen Stegs und die mindestens zwei dehnbaren Spanneinrichtungen (206) zwischen der dritten Seite und dem Verbindungssteg angeordnet sind.

10. Vorrichtung gemäß einem der vorangegangenen Ansprüche, mit einer Befestigungseinrichtung (220), die ausgebildet ist, um eine Befestigung des Energiespeichers an einem Fahrzeugteil oder an einer zur Kühlung oder Heizung des Energiespeichers vorgesehenen Kühiplatte zu ermöglichen.

11. Energiespeicher (100), der eine oder eine Mehrzahl von Zellen, und eine Vorrichtung zur Verspannung gemäß einem der vorangegangenen Ansprüche aufweist.

## Claims

1. An apparatus for restraining an energy store (100) having one or a plurality of cells disposed between a first side (501) of the energy store and a second side (502) of the energy store vertically opposite the first side, comprising the following features:
at least one first mounting device (202) which is designed to transmit a first clamping force acting in the direction of the second side to the first side of the energy store;
at least one second mounting device which is designed to transmit a second clamping force acting in the direction of the first side to the second side of the energy store; and
at least one expandable clamping device (206), which is designed to provide the first and second clamping forces and is furthermore designed to adapt a distance between the at least one first mounting device and the at least one second mounting device to a tolerated distance between the first and second sides, comprising a plurality of first mounting devices (202), a plurality of second mounting devices, at least two expandable clamping devices (206) and a horizontally disposed connecting web (208) that is connected to the plurality of first mounting devices or the plurality of second mounting devices, and wherein the connecting web runs horizontally over a third side (503) of the energy store disposed between a fourth side (504) and a fifth side (505) and has a first fastening device (210) for fastening the connecting web to the fourth side and a second fastening device for fastening the connecting web to the fifth side.

2. The apparatus according to claim 1, wherein at least one of the mounting devices (202) is designed as hook which may be hooked to the corresponding side in order to transmit the clamping force.

3. The apparatus according to one of the preceding claims, wherein at least one of the mounting devices is designed as mounting plate (1202) which may rest on the corresponding side in order to transmit the clamping force.

4. The apparatus according to one of the preceding claims, wherein the expandable clamping device (206) is disposed between the first and the second mounting devices (202) and is connected to both the first mounting device and the second mounting device.

5. The apparatus according to one of the preceding claims, wherein at least one of the mounting devices is designed as a circular spring (602) which may be hooked to the corresponding side in order to transmit the clamping force.

6. The apparatus according to claim 5, wherein the circular spring (602) comprises at least one of the at least one expandable clamping devices.

7. The apparatus according to claim 6, wherein the connecting web (208) is disposed between the two expandable clamping devices (206) and the plurality of first mounting devices (202) or the plurality of second mounting devices.

8. The apparatus according to one of the preceding claims, wherein the at least two expandable clamping devices (206) are disposed parallel to each other, and a vertical web (212) that is connected to the connecting web (208) is disposed in each case between two adjacent expandable clamping devices.

9. The apparatus according to claim 8, wherein the vertical web (212) has a bend (214) on an end facing the connecting web, so that another area of the vertical web and the at least two expandable clamping devices (206) are disposed between the third side and the connecting web.

10. The apparatus according to one of the preceding claims, comprising an attachment device (220) which is designed to permit an attachment of the energy store to a vehicle part or to a cooling plate provided for cooling or heating the energy store.

11. An energy store (100) which has one or a plurality of cells, and a restraining apparatus according to one of the preceding claims.

## Revendications

1. Dispositif de serrage d'un accumulateur d'énergie (100) qui présente une cellule ou une pluralité de cellules qui est ou sont disposée(s) entre un premier côté (501) de l'accumulateur d'énergie et un deuxième côté (502) de l'accumulateur d'énergie, opposé verticalement au premier côté, ledit dispositif de serrage ayant les caractéristiques suivantes et comprenant :
au moins un premier dispositif de retenue (202) qui est conçu pour transmettre au premier côté de l'accumulateur d'énergie, une première force de serrage agissant en direction du deuxième côté ;
au moins un deuxième dispositif de retenue qui est conçu pour transmettre au deuxième côté de l'accumulateur d'énergie, une deuxième force de serrage agissant en direction du premier côté ; et
au moins un dispositif de serrage extensible (206) qui est conçu pour fournir la première et la deuxième forces de serrage et qui est conçu en outre pour adapter une distance comprise entre le premier dispositif de retenue au moins au nombre de un et le deuxième dispositif de retenue au moins au nombre de un, à une distance ayant une certaine limite de tolérance et comprise entre le premier et le deuxième côtés, comprenant une pluralité de premiers dispositifs de retenue (202), une pluralité de deuxièmes dispositifs de retenue, au moins deux dispositifs de serrage extensibles (206) et une barrette de liaison (208) disposée horizontalement qui est reliée à la pluralité de premiers dispositifs de retenue ou à la pluralité de deuxièmes dispositifs de retenue, et où la barrette de liaison s'étend horizontalement sur un troisième côté (503) de l'accumulateur d'énergie, disposé entre un quatrième (504) et un cinquième (505) côtés, et présente un premier dispositif de fixation (210) servant à la fixation de la barrette de liaison sur le quatrième côté, et un deuxième dispositif de fixation servant à la fixation de la barrette de liaison sur le cinquième côté.

2. Dispositif selon la revendication 1, dans lequel au moins l'un des dispositifs de retenue (202) est configuré comme un crochet qui peut être accroché au côté correspondant, pour la transmission de la force de serrage.

3. Dispositif selon l'une ou l'autre des revendications précédentes, dans lequel au moins l'un des dispositifs de retenue est configuré comme une plaque de retenue (1202) qui peut venir en appui sur le côté correspondant, pour la transmission de la force de serrage.

4. Dispositif selon l'une quelconque des revendications précédentes, dans lequel le dispositif de serrage extensible (206) est disposé entre le premier et le deuxième dispositifs de retenue (202) et est relié aussi bien au premier dispositif de retenue qu'au deuxième dispositif de retenue.

5. Dispositif selon l'une quelconque des revendications précédentes, dans lequel au moins l'un des dispositifs de retenue est configuré comme un ressort torique (602) qui peut être accroché au côté correspondant, pour la transmission de la force de serrage.

6. Dispositif selon la revendication 5, dans lequel le ressort torique (602) comprend au moins l'un des dispositifs de serrage extensibles au moins au nombre de un.

7. Dispositif selon la revendication 6, où la barrette de liaison (208) est disposée entre les deux dispositifs de serrage extensibles (206) et la pluralité de premiers dispositifs de retenue (202) ou la pluralité de deuxièmes dispositifs de retenue.

8. Dispositif selon l'une quelconque des revendications précédentes, dans lequel les dispositifs de serrage extensibles (206) au moins au nombre de deux sont disposés en étant parallèles entre eux, et une barrette verticale (212) est disposée à chaque fois entre deux dispositifs de serrage extensibles adjacents, laquelle barrette verticale est reliée à la barrette de liaison (208).

9. Dispositif selon la revendication 8, dans lequel la barrette verticale (212) présente une courbure (214) au niveau d'une extrémité tournée vers la barrette de liaison, de sorte qu'une autre zone de la barrette verticale et les dispositifs de serrage extensibles (206) au moins au nombre de deux sont disposés entre le troisième côté et la barrette de liaison.

10. Dispositif selon l'une quelconque des revendications précédentes, comprenant un dispositif de fixation (220) qui est conçu pour permettre une fixation de l'accumulateur d'énergie sur une pièce du véhicule ou sur une plaque de refroidissement prévue pour le refroidissement ou le chauffage de l'accumulateur d'énergie.

11. Accumulateur d'énergie (100) qui présente une cellule ou une pluralité de cellules et un dispositif de serrage selon l'une quelconque des revendications précédentes.
